# EUROPEAN PATENT SPECIFICATION

(11) **EP 4 135 479 B1**
(45) Date of publication and mention of the grant of the patent: **25.06.2025**
(21) Application number: 21784262.4
(22) Date of filing: 22.03.2021
(51) Int. Cl.: H05B 6/12, H05B 6/06

(54) **INDUCTION HEATING TYPE COOKTOP**
INDUKTIONSKOCHFELD
TABLE DE CUISSON DE TYPE À CHAUFFAGE PAR INDUCTION

(30) Priority: 08.04.2020 KR 20200042746
(43) Date of publication of application: 15.02.2023
(73) Proprietor: LG Electronics, Inc., Yeongdeungpo-gu Seoul 07336 (KR)
(72) Inventor: KWACK, Younghwan, Seoul 08592 (KR); CHO, Chuhyoung, Seoul 08592 (KR); SON, Seongho, Seoul 08592 (KR); JEON, Seonho, Seoul 08592 (KR); JI, Jongseong, Seoul 08592 (KR)
(74) Representative: Frenkel, Matthias Alexander
(86) International application number: PCT/KR2021/003469
(87) International publication number: WO 2021/206310

(56) References cited:
- EP-A1- 3 570 634
- EP-A1- 4 132 221
- JP-A- 2015 079 763
- JP-B2- 5 369 202
- KR-A- 20170 016 608
- KR-A- 20200 025 929
- KR-B1- 100 915 416
- US-A1- 2019 223 263

## Description

### [Technical Field]

The present disclosure relates to an induction heating type cooktop. More particularly, the present disclosure relates to an induction heating type cooktop coated with a thin film.

### [Background Art]

Various types of cooking equipments are used to heat food at home or in a restaurant. Conventionally, gas stoves using gas as fuel have been widely used, but recently devices for heating an object to be heated, for example, cooking vessels such as pots, have been spread using electricity instead of gas.

A method of heating an object to be heated using electricity is largely divided into a resistance heating method and an induction heating method. The electric resistance method is a method of heating an object to be heated by transferring heat generated when an electric current flows through a metal resistance wire or a non-metallic heating element such as silicon carbide to the object to be heated (for example, a cooking vessel) through radiation or conduction. In addition, when high-frequency power of a predetermined size is applied to the coil, the induction heating method generates an eddy current in the object to be heated consisting of a metal component using a magnetic field generated around the coil to heat the object to be heated itself.

Recently, most of the induction heating methods are applied to cooktops.

Meanwhile, the induction heating type cooktop may be driven by a dual coil (for example, a combination of an inner coil and an outer coil) method. The conventional dual coil driving method separately installs an inverter for driving an inner coil and an inverter for driving an outer coil to determine the output of the dual coil.

At this time, the signal of the separate inverter for driving each coil must be completely synchronized to control the cooktop so that the output does not shake. Accordingly, in the conventional working coil driving method, a circuit for synchronizing an inverter signal must be additionally configured to control an output, and thus there is a problem in that the circuit configuration is complicated.

Meanwhile, when the inner coil and the outer coil are driven by one inverter without a separate inverter for driving each coil, there is a problem in that each coil cannot be selectively driven. Therefore, when heating the magnetic vessel, even in a situation where the target heating effect can be achieved only by the operation of the inner coil, the outer coil operates together, and thus there is a problem in that the efficiency is lowered. Documents US 2019/223263 A1, EP 3 570 634 A1, KR 2020 0025929 A , KR 2017 0016608 A, KR 100 915 416 B1, JP 2015 079763 A and JP 5 369202 B2 disclose induction heating type cooktops according to the prior art.

### [Disclosure]

### [Technical Problem]

An object of the present disclosure is to provide an apparatus that minimizes the problem that the heating efficiency of the magnetic vessel is lowered even when the dual coil is driven by one inverter.

An object of the present disclosure is to minimize a problem in that the heating efficiency of each of the magnetic and nonmagnetic materials decreases in an induction heating type cooktop capable of heating both magnetic and nonmagnetic materials.

An object of the present disclosure is to provide an apparatus capable of increasing heating efficiency for each of a magnetic material and a nonmagnetic material without sensing the type of an object to be heated in an induction heating type cooktop capable of heating both a magnetic material and a nonmagnetic material.

### [Technical Solution]

The induction heating type cooktop according to an embodiment of the present disclosure includes a switch portion connected between the plurality of working coils, thereby selectively driving the plurality of working coils with one inverter.

The induction heating type cooktop according to an embodiment of the present disclosure selectively drives a plurality of working coils according to a result of comparing target power and output power.

The induction heating type cooktop according to an embodiment of the present disclosure changes the magnetic field region by a plurality of selectively driven working coils.

### [Advantageous Effect]

According to the present disclosure, since heating efficiency can increase even without a plurality of inverters in order to drive a plurality of working coils, there is an advantage in that it is possible to reduce manufacturing cost and simplify the structure.

According to the present disclosure, it is possible to selectively drive a plurality of working coils driven by one inverter to concentrate a magnetic field into a thin film or a magnetic vessel, thereby minimizing a decrease in heating efficiency for each of the magnetic and nonmagnetic materials, and thus there are advantages in that the heating performance can increase.

According to the present disclosure, since heating efficiency can increase without a separate sensor for detecting whether the object to be heated is a magnetic material or a nonmagnetic material, there is an advantage in that the manufacturing cost can be reduced and the structure can be simplified.

### [Description of Drawings]

FIG. 1 is a view for explaining an induction heating type cooktop according to an embodiment of the present disclosure.
FIG. 2 is a cross-sectional view illustrating an induction heating type cooktop and an object to be heated according to an embodiment of the present disclosure.
FIG. 3 is a cross-sectional view illustrating an induction heating type cooktop and an object to be heated according to another embodiment of the present disclosure.
FIGS. 4 and 5 are diagrams for explaining a relationship between a thickness of a thin film and a skin depth.
FIGS. 6 and 7 are diagrams for explaining a change in impedance between a thin film and an object to be heated according to the type of object to be heated.
FIG. 8 is a circuit diagram of an induction heating type cooktop according to an embodiment of the present disclosure.
FIG. 9 is an exemplary view illustrating a shape of a thin film of an induction heating type cooktop according to an embodiment of the present disclosure.
FIG. 10 is an exemplary view illustrating a state of a working coil portion of an induction heating type cooktop according to an embodiment of the present disclosure.
FIG. 11 is a view for explaining an induction heating type cooktop according to an embodiment of the present disclosure.
FIG. 12 is a control block diagram illustrating the configuration of an induction heating type cooktop according to an embodiment of the present disclosure.
FIG. 13 is a flowchart illustrating a method for operating an induction heating type cooktop according to an embodiment of the present disclosure.
FIG. 14 is an exemplary view illustrating a coupling state of a magnetic field when only the first working coil operates according to an embodiment of the present disclosure.
FIG. 15 is an exemplary diagram illustrating a state where a magnetic field is coupled when both a first working coil and a second working coil operate according to an embodiment of the present disclosure.

### [Best Mode]

Hereinafter, preferred embodiments according to the present disclosure will be described in detail with reference to the accompanying drawings. In the drawings, the same reference numerals are used to refer to the same or similar components.

Hereinafter, an induction heating type cooktop according to an embodiment of the present disclosure will be described.

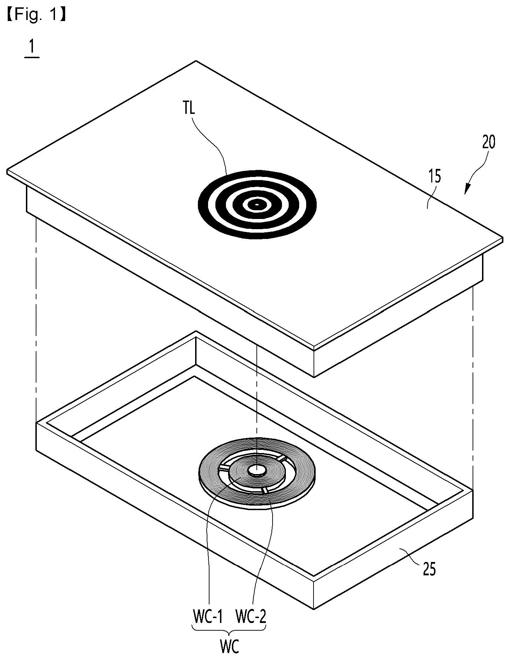

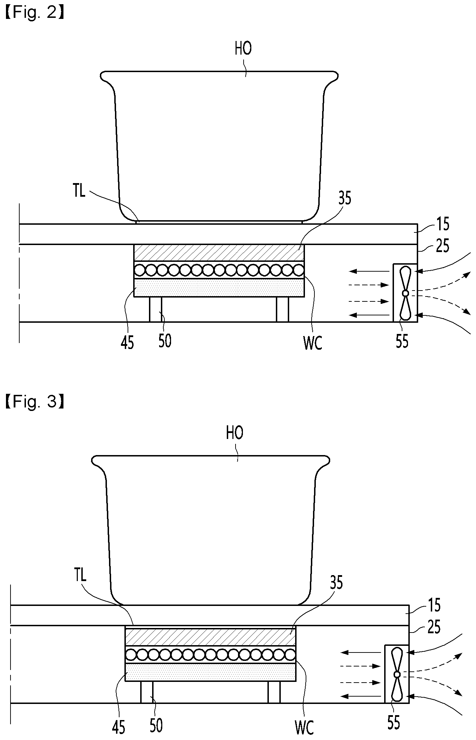

FIG. 1 is a view for explaining an induction heating type cooktop according to an embodiment of the present disclosure, FIG. 2 is a cross-sectional view illustrating an induction heating type cooktop and an object to be heated according to an embodiment of the present disclosure, and FIG. 3 is a cross-sectional view illustrating an induction heating type cooktop and an object to be heated according to another embodiment of the present disclosure.

First, referring to FIG. 1, an induction heating type cooktop 1 according to an embodiment of the present disclosure includes a case 25, a cover plate 20, a working coil portion WC, and a thin film TL.

A working coil portion WC is installed in the case 25.

For reference, in the case 25, in addition to the working coil portion WC, various devices related to the driving of the working coil (for example, a power supply providing AC power, a rectifying portion for rectifying the AC power of the power supply into DC power, an inverter portion that converts DC power rectified by the rectifying portion into a resonance current through a switching operation to provide the resonance current to the working coil, a control module that controls the operation of various devices in the induction heating type cooktop 1, and a relay or semiconductor switch that turns the working coil on or off, and the like) may be installed, but a detailed description thereof will be described below.

The cover plate 20 is coupled to the upper end of the case 25, and an upper plate portion 15 on which an object to be heated (not illustrated) is disposed is provided on the upper surface.

Specifically, the cover plate 20 includes an upper plate portion 15 for placing an object to be heated, such as a cooking vessel.

Here, the upper plate portion 15 may be made of, for example, a glass material (for example, ceramics glass).

In addition, the upper plate portion 15 may be provided with an input interface (not illustrated) that receives an input from a user and transmits the input to a control module (not illustrated) for an input interface. Of course, the input interface may be provided at a location other than the upper plate portion 15.

For reference, the input interface is a module for inputting a desired heating intensity or operating time of the induction heating type cooktop 1 and may be variously implemented as a physical button or a touch panel. In addition, the input interface may include, for example, a power button, a lock button, a power level adjustment button (+, -), a timer adjustment button (+, -), a charging mode button, and the like. In addition, the input interface may transmit the input received from the user to the control module for the input interface (not illustrated), and the control module for the input interface may transmit the input to the aforementioned control module (that is, the control module for the inverter). In addition, the above-described control module can control the operation of various devices (for example, a working coil) based on an input (that is, a user input) received from the control module for the input interface, and specific details thereof will be omitted.

Meanwhile, on the upper plate portion 15, whether the working coil portion WC is driven and the heating intensity (that is, thermal power) may be visually displayed in the shape of a crater. The shape of the crater may be indicated by an indicator (not illustrated) composed of a plurality of light emitting devices (for example, LEDs) provided in the case 25.

The working coil portion WC is installed inside the case 25 to heat the object to be heated. The working coil portion WC includes a first working coil WC-1 (Inner Coil) disposed therein and a second working coil WC-2 (Outer Coil) disposed outside.

The working coil portion WC is controlled to be driven by the aforementioned control module (not illustrated), and when the object to be heated is disposed on the upper plate portion 15, the working coil WC may be driven by the control module.

In addition, the working coil portion WC can directly heat a magnetic object to be heated (that is, a magnetic material), and can indirectly heat a nonmagnetic object to be heated through a thin film TL, which will be described later.

In addition, the working coil portion WC may heat an object to be heated by an induction heating method and may be provided to overlap the thin film TL in a longitudinal direction (that is, a vertical direction or an up and down direction).

For reference, although one working coil portion WC is illustrated as being installed in the case 25 in FIG. 1, the present disclosure is not limited thereto. In other words, one or three or more working coil portions WC may be installed in the case 25, but for convenience of explanation, in the embodiment of the present disclosure, a case where one working coil portion WC is installed in the case 25 will be described as an example.

The thin film TL is coated on the upper plate portion 15 to heat a nonmagnetic material among the objects to be heated. The thin film TL may be inductively heated by the working coil portion WC.

The thin film TL may be coated on the upper surface or the lower surface of the upper plate portion 15. For example, as illustrated in FIG. 2, the thin film TL may be coated on the upper surface of the upper plate portion 15, or as illustrated in FIG. 3, the thin film TL may be coated on the lower surface of the upper plate portion 15.

The thin film TL may be provided to overlap the working coil portion WC in a longitudinal direction (that is, a vertical direction or an up and down direction). Accordingly, it is possible to heat the object to be heated regardless of the disposition position and type of the object to be heated.

In addition, the thin film TL may have at least one of magnetic and nonmagnetic properties (that is, magnetic, nonmagnetic, or both magnetic and nonmagnetic).

In addition, the thin film TL may be made of, for example, a conductive material (for example, aluminum), and as illustrated in the drawing, a plurality of rings of different diameters may be coated on the upper plate portion 15 in a repeating shape, but is not limited thereto. In other words, the thin film TL may be made of a material other than the conductive material. In addition, the thin film TL may be formed in a shape other than a shape in which a plurality of rings having different diameters are repeated.

For reference, although one thin film TL is illustrated in FIGS. 2 and 3, the present disclosure is not limited thereto. In other words, a plurality of thin films may be coated, but for convenience of description, a case where one thin film TL is coated will be described as an example.

A more detailed description of the thin film TL will be described later.

Next, referring to FIGS. 2 and 3, the induction heating type cooktop 1 according to an embodiment of the present disclosure may further include at least some or all of an adiabatic material 35, a shielding plate 45, a support member 50, and a cooling fan 55.

The adiabatic material 35 may be provided between the upper plate portion 15 and the working coil portion WC.

Specifically, the adiabatic material 35 may be mounted under the upper plate portion 15, and a working coil portion WC may be disposed under the adiabatic material.

The adiabatic material 35 may block the transfer of heat generated to the working coil portion WC while the thin film TL or the object to be heated HO is heated by the driving of the working coil portion WC.

In other words, when the thin film TL or the object to be heated HO is heated by electromagnetic induction of the working coil portion WC, the heat of the thin film TL or the object to be heated HO is transferred to the upper plate portion 15, and the heat of the upper plate portion 15 is transferred back to the working coil portion WC, and thus the working coil portion WC may be damaged.

The adiabatic material 35 blocks the heat transferred to the working coil portion WC in this way, thereby preventing the working coil portion WC from being damaged by heat, and furthermore, preventing the decrease in the heating performance of the working coil portion WC.

For reference, although it is not an essential component, a spacer (not illustrated) may be installed between the working coil portion WC and the adiabatic material 35.

Specifically, a spacer (not illustrated) may be inserted between the working coil portion WC and the adiabatic material 35 so that the working coil portion WC and the adiabatic material 35 do not directly contact each other. Accordingly, the spacer (not illustrated) may block the transfer of heat generated while the thin film TL or the object to be heated HO is heated by the driving of the working coil portion WC to the working coil portion WC through the adiabatic material 35.

In other words, the spacer (not illustrated) can share a part of the role of the adiabatic material 35, and thus the thickness of the adiabatic material 35 can be minimized, and through this, the spacing between the object to be heated HO and the working coil portion WC can be minimized.

In addition, a plurality of spacers (not illustrated) may be provided, and the plurality of spacers may be disposed to be spaced apart from each other between the working coil portion WC and the adiabatic material 35. Accordingly, the air suctioned into the case 25 by the cooling fan 55 to be described later may be guided to the working coil portion WC by the spacer.

In other words, the spacer may improve the cooling efficiency of the working coil portion WC by guiding the air flowing into the case 25 by the cooling fan 55 to be properly transmitted to the working coil portion WC.

The shielding plate 45 may be mounted on the lower surface of the working coil portion WC to block a magnetic field generated downward when the working coil portion WC is driven.

Specifically, the shielding plate 45 may block a magnetic field generated downward when the working coil portion WC is driven and may be supported upward by the support member 50.

The support member 50 may be installed between the lower surface of the shielding plate 45 and the lower plate of the case 25 to support the shielding plate 45 upward.

Specifically, the support member 50 may support the shielding plate 45 upwardly, thereby indirectly supporting the adiabatic material 35 and the working coil portion WC upwardly, and through this, the adiabatic material 35 can be in close contact with the upper plate portion 15.

As a result, the distance between the working coil portion WC and the object to be heated HO can be kept constant.

For reference, the support member 50 may include, for example, an elastic body (for example, a spring) for supporting the shielding plate 45 upward, but is not limited thereto. In addition, since the support member 50 is not an essential component, the induction heating type cooktop 1 may be omitted.

The cooling fan 55 may be installed inside the case 25 to cool the working coil portion WC.

Specifically, the cooling fan 55 may be controlled to be driven by the aforementioned control module and may be installed on the sidewall of the case 25. Of course, the cooling fan 55 may be installed at a location other than the sidewall of the case 25, but in an embodiment of the present disclosure, for convenience of explanation, a case where the cooling fan 55 is installed on the side wall of the case 25 will be described as an example.

In addition, as illustrated in FIGS. 2 and 3, the cooling fan 55 suctions air from the outside of the case 25 and delivers the air to the working coil portion WC or suctions air (particularly, heat) inside the case 25 to be capable of discharging the air to the outside of the case 25.

Through this, efficient cooling of the components (particularly, the working coil portion WC) inside the case 25 is possible.

In addition, as described above, the air outside the case 25 delivered to the working coil portion WC by the cooling fan 55 may be guided to the working coil portion WC by the spacer. Accordingly, direct and efficient cooling of the working coil portion WC is possible, thereby being capable of improving the durability of the working coil portion WC (that is, improving the durability by preventing thermal damage).

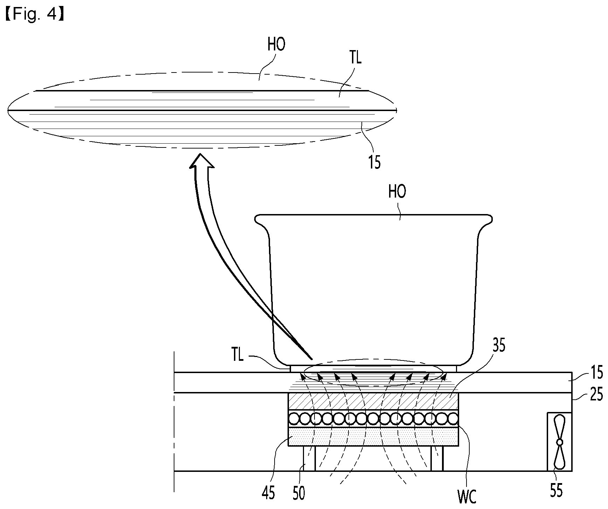

As such, the induction heating type cooktop 1 according to an embodiment of the present disclosure may have the above-described characteristics and configuration, and hereinafter, with reference to FIGS. 4 to 7, the characteristics and configuration of the above-described thin film is described in more detail.

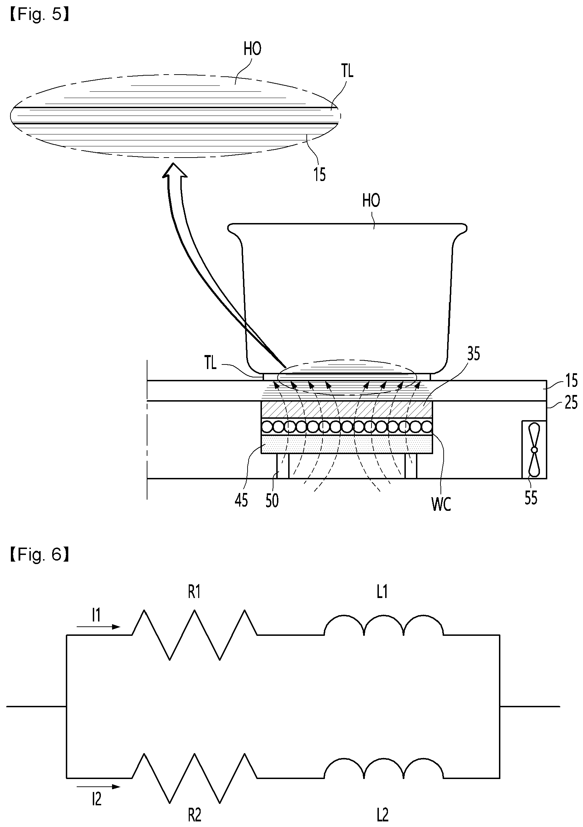

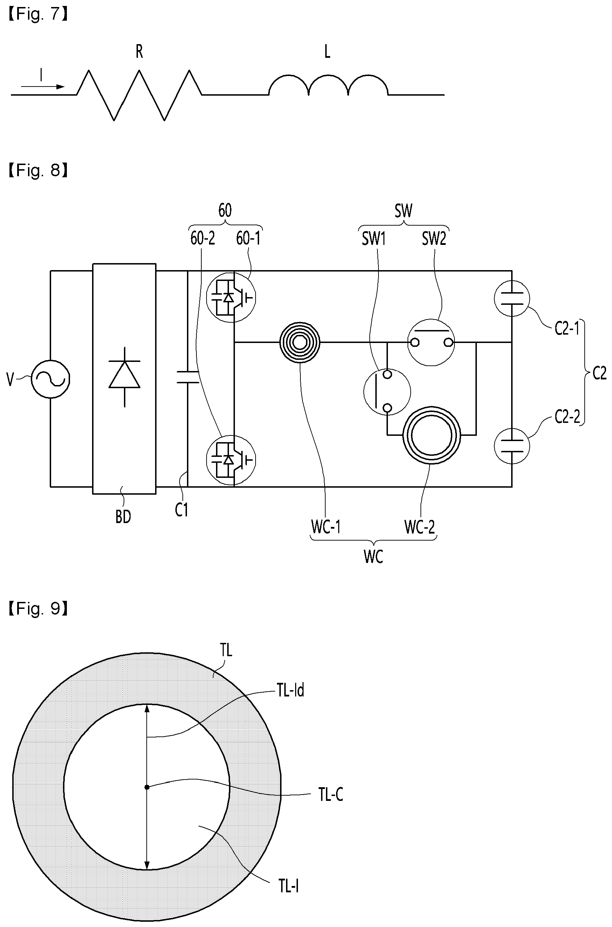

FIGS. 4 and 5 are diagrams for explaining a relationship between a thickness of a thin film and a skin depth, and FIGS. 6 and 7 are diagrams for explaining a change in impedance between a thin film and an object to be heated according to the type of object to be heated.

The thin film TL may be made of a material having low relative permeability.

Specifically, since the relative permeability of the thin film TL is low, the skin depth of the thin film TL may be deep. Here, the skin depth means an electric current penetration depth from the surface of the material, and the relative permeability may be inversely proportional to the skin depth. Accordingly, as the relative permeability of the thin film TL decreases, the skin depth of the thin film TL deeps.

In addition, the skin depth of the thin film TL may be thicker than the thickness of the thin film TL. In other words, the thin film TL has a thin thickness (for example, 0.1 um to 1,000 um thickness), and since the skin depth of the thin film TL is deeper than the thickness of the thin film TL, the magnetic field generated by the working coil portion WC passes through the thin film to transfer to the object to be heated HO and thus an eddy current may be induced in the object to be heated HO.

In other words, as illustrated in FIG. 4, when the skin depth of the thin film TL is shallower than the thickness of the thin film TL, it can be difficult for the magnetic field generated by the working coil portion WC to reach the object to be heated HO.

However, as illustrated in FIG. 5, when the skin depth of the thin film TL is deeper than the thickness of the thin film TL, the magnetic field generated by the working coil portion WC may reach the object to be heated HO. In other words, in the embodiment of the present disclosure, since the skin depth of the thin film TL is deeper than the thickness of the thin film TL, the magnetic field generated by the working coil portion WC passes through the thin film TL and most of the magnetic field is transferred to the object to be heated HO and consumed, and accordingly, the object to be heated HO can be mainly heated.

Meanwhile, since the thin film TL has a thin thickness as described above, the thin film TL may have a resistance

Specifically, the thickness of the thin film TL may be inversely proportional to a resistance value (that is, surface resistance value) of the thin film TL. In other words, as the thickness of the thin film TL coated on the upper plate portion 15 is thinner, since the resistance value (that is, surface resistance value) of the thin film TL increases, the thin film TL may be thinly coated on the upper plate portion 15, so that characteristics may be changed to a load that can be heated.

For reference, the thin film TL may have a thickness of, for example, 0.1 µm to 1,000 µm, but is not limited thereto.

The thin film TL having such a characteristic is present to heat the nonmagnetic material, and the impedance characteristic between the thin film TL and the object to be heated HO can be changed according to whether the object to be heated HO disposed on the upper plate portion 15 is a magnetic material or a nonmagnetic material.

First, a case whether the object to be heated HO is a magnetic material will be described as follows.

When the magnetic object to be heated HO is disposed on the upper plate portion 15, and the working coil portion WC is driven, as illustrated in FIG. 6, the resistance component R1 and the inductor component L1 of the object to be heated HO may form an equivalent circuit with the resistance component R2 and the inductor component L2 of the thin film TL.

In this case, the impedance of the magnetic object to be heated HO (that is, the impedance composed of R1 and L1) may be smaller than the impedance of the thin film TL (that is, the impedance composed of R2 and L2).

Accordingly, when the equivalent circuit as described above is formed, the magnitude of the eddy current I1 applied to the magnetic object to be heated HO may be greater than the magnitude of the eddy current I2 applied to the thin film TL. Accordingly, most of the eddy currents generated by the working coil portion WC may be applied to the object to be heated HO, so that the object to be heated HO may be heated.

In other words, when the object to be heated HO is a magnetic material, since the above-described equivalent circuit is formed and most of the eddy current is applied to the object HO, the working coil portion WC can directly heat the object to be heated HO.

Of course, since some eddy current is also applied to the thin film TL to slightly heat the thin film TL, the object to be heated HO may be slightly heated indirectly by the thin film TL. In this case, the working coil portion WC may be a main heating source, and the thin film TL may be a secondary heating source. However, compared with the degree to which the object HO is directly heated by the working coil portion WC, the degree to which the object to be heated HO is indirectly heated by the thin film TL may be not significant.

Next, a case where the object to be heated is a nonmagnetic material will be described as follows.

When the nonmagnetic object to be heated HO is disposed on the upper plate portion 15 and the working coil portion WC is driven, there may be no impedance in the nonmagnetic object to be heated HO, and there may be impedance the thin film TL. In other words, the resistance component R and the inductor component L may exist only in the thin film TL.

Accordingly, when the nonmagnetic object to be heated HO is disposed on the upper plate portion 15 and the working coil portion WC is driven, as illustrated in FIG. 7, the resistance component R and he inductor component L of the thin film TL may form an equivalent circuit.

Accordingly, the eddy current I may be applied only to the thin film TL, and the eddy current may not be applied to the nonmagnetic object to be heated. More specifically, the eddy current I generated by the working coil portion WC may be applied only to the thin film TL, so that the thin film TL may be heated.

In other words, when the object to be heated HO is a nonmagnetic material, as described above, since the eddy current I is applied to the thin film TL to heat the thin film TL, the nonmagnetic object to be heated HO may be indirectly heated by the thin film TL heated by the working coil portion WC. In this case, the thin film TL may be a main heating source.

In summary, the object to be heated HO may be directly or indirectly heated by a single heat source called the working coil portion WC regardless of whether the object to be heated HO is a magnetic material or a nonmagnetic material. In other words, when the object to be heated HO is a magnetic material, the working coil portion WC directly heats the object to be heated HO, and when the object to be heated HO is a nonmagnetic material, the thin film TL heated by the working coil portion WC can indirectly heat the object to be heated HO.

As described above, since the induction heating type cooktop 1 according to an embodiment of the present disclosure can heat both a magnetic material and a nonmagnetic material, regardless of the disposition position and type of the object to be heated HO, the object to be heated can be heated. Accordingly, since the user may place the object to be heated on any heating area on the top plate portion 15 without needing to determine whether the object to be heated HO is a magnetic material or a nonmagnetic material, ease of use may be improved.

In addition, since the induction heating type cooktop 1 of according to an embodiment of the present disclosure can directly or indirectly heat an object to be heated with the same heat source, there is no need to provide a separate heating plate or a radiant heater. Accordingly, it is possible to not only increase the heating efficiency but also reduce the material cost.

Meanwhile, the conventional induction heating type cooktop 1 takes a method for installing a separate inverter in each of the two coils to drive the first working coil (WC-1, Inner Coil) and the second working coil (WC-2, Outer Coil). In this case, when the driving signal is applied to a separate inverter, the inverter driving signal must be completely synchronized, and there is a problem in that the control to completely synchronize the inverter driving signal is inconvenient. In addition, if the inverter driving signal is not completely synchronized, the output is shaken, which makes it difficult to control.

In order to solve the above problems, the induction heating type cooktop 1 according to an embodiment of the present disclosure controls the first working coil WC-1 and the second working coil WC-2 through one inverter. In addition, according to the embodiment, by selectively driving the first working coil (WC-1) and the second working coil (WC-2) to control the magnetic field region, it is intended to improve the heating performance regardless of the type of vessel.

First, a control circuit of the induction heating type cooktop 1 according to an embodiment of the present disclosure will be described.

FIG. 8 is a circuit diagram of an induction heating type cooktop according to an embodiment of the present disclosure.

The control circuit may include a power supply V that provides AC power, a bridge diode BD that rectifies the AC power of the power supply into DC power, a DC link capacitor C1 that smoothes the rectified DC power, an inverter 60 that converts the rectified DC power to resonance current through a switching operation to provide the resonance current into working coil portion WC, a working coil portion WC forming magnetic field by the resonance current, a switch portion SW including a first switch SW1 and a second switch SW2 which determine whether the working coil portion WC is connected in series, and a resonance capacitor C2.

The inverter 60 may include at least two or more switching elements 60 - 1 and 60 - 2. The switching elements 60 - 1 and 60 - 2 may be high-frequency semiconductor elements. For example, the switching element may include an IGBT, a BJT, a MOSFET, and the like. Since the driving method of the inverter 60 is a known technology, a detailed description thereof will be omitted.

The working coil portion WC may include a first working coil WC-1 and a second working coil WC-2.

One end of the first working coil WC-1 is connected between the switching elements 60-1 and 60-2 of the inverter 60, and the other end thereof may be connected to at least one of the first switch SW1 and the second switch SW2. The first working coil WC-1 may be directly connected to the resonance capacitor C2 according to the operation of the first switch SW1 and the second switch SW2 or may be connected in series with the second working coil WC2 to be connected to the resonance capacitor C2.

One end of the second working coil WC-2 may be connected to the first switch SW1, and the other end may be connected between the resonance capacitors C2-1 and C2-2. Unlike the drawings, one end of the second working coil WC-2 may be connected to the first working coil WC-1, and the other end may be connected to the first switch SW1. In other words, the positions of the first switch SW1 and the second working coil WC-2 illustrated in the drawings may be changed from each other. Accordingly, the first switch SW1 is positioned between the first working coil WC-1 and the second working coil WC-2 and may be positioned between the second working coil WC-2 and the resonance capacitor C2 -1 and C2-2.

The first switch SW1 may determine whether the first working coil WC-1 and the second working coil WC-2 are connected in series according to whether the first switch SW1 is turned on or off. For example, when the first switch SW1 is turned on, the first working coil WC-1 and the second working coil WC-2 may be connected in series. On the other hand, when the first switch SW1 is turned off, the series connection between the first working coil WC-1 and the second working coil WC-2 may be cut off.

The second switch SW2 may operate in association with the operation of the first switch SW1. When the first switch SW1 is turned on, the second switch SW2 may be turned off, and when the first switch SW1 is turned off, the second switch SW2 may be turned on.

For example, when the first switch SW1 is turned on, the second switch SW2 is turned off so that the first working coil WC-1 and the second working coil WC-2 may be connected in series. At this time, an electric current may be applied to the first working coil WC-1 and the second working coil WC-2 by the inverter 60.

In addition, when the first switch SW1 is turned off, the second switch SW2 may be turned on to connect the first working coil WC-1 to the resonance capacitor C2. At this time, an electric current may be applied only to the first working coil WC-1 by the inverter 60.

The second working coil WC-2 may be selectively connected to the first working coil WC-1 according to on/off of the first switch SW1. An electric current is applied to the first working coil WC-1 regardless of the on/off of the first switch SW1, and an electric current may be applied to the second working coil WC-2 only when the first switch SW1 is turned on.

The above-described driving method of the first switch SW1 and the second switch SW2 is merely an example. In the present specification, although it is described that the first switch SW1 and the second switch SW2 are used as two switches, only the first working coil WC- 1 may be driven or the first working coil WC-1 and the second working coil WC-2 may be driven.

Next, the shape of the thin film and the shape of the working coil portion in the induction heating type cooktop according to an embodiment of the present disclosure will be described with reference to FIGS. 9 to 11.

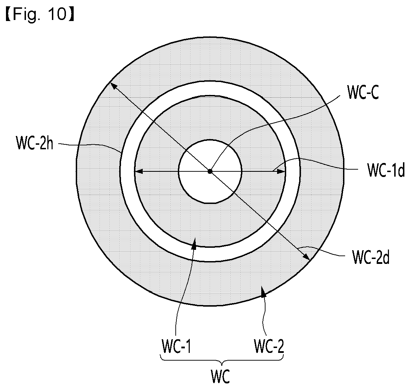

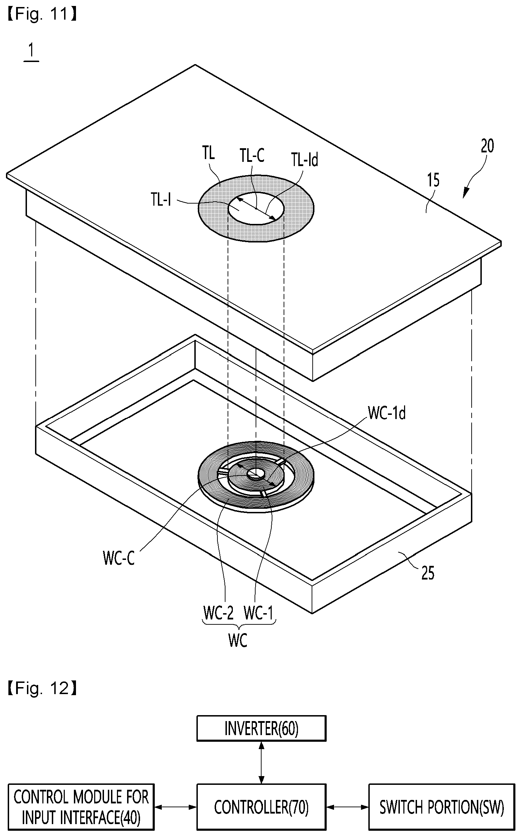

FIG. 9 is an exemplary view illustrating a shape of a thin film of an induction heating type cooktop according to an embodiment of the present disclosure, FIG. 10 is an exemplary view illustrating a state of a working coil portion of an induction heating type cooktop according to an embodiment of the present disclosure, and FIG. 11 is a view for explaining an induction heating type cooktop according to an embodiment of the present disclosure.

In the induction heating type cooktop 1 according to an embodiment of the present disclosure, an opening TL-I may be formed in the center of the thin film TL. The opening TL-I may include a region up to a predetermined distance including the center TL-C of the opening. The opening TL-I of the thin film is a portion on which the thin film TL is not coated and may be an open region for detecting the temperature of the upper plate portion 15. In addition, the opening TL-I of the thin film may be a region through which the magnetic field induced by the working coil portion WC passes.

In other words, the opening TL-I of the thin film may serve to pass the magnetic field such that the magnetic field generated in the working coil portion WC is combined with the object to be heated HO.

In this case, the diameter TL-Id of the opening TL-I is equal to the diameter WC-1d of the first working coil WC-1 or may be smaller than the diameter WC-1d of the first working coil WC-1.

When the diameter TL-Id of the opening TL-I is equal to the diameter WC-1d of the first working coil WC-1 or is smaller than the diameter WC-1d of the first working coil WC-1, and only the first working coil WC-1 operates, since most of the magnetic field generated in the first working coil WC-1 passes through the opening TL-1 and is coupled to the object to be heated HO, the magnetic field coupled to the thin film TL is minimized. Accordingly, there is an advantage in that the heating efficiency of the object to be heated HO, which is a magnetic body, is maximized.

As illustrated in FIG. 10, in the working coil portion WC, the diameter WC-2d of the second working coil WC-2 is greater than the diameter WC-1d of the first working coil WC-1, and a hole WC-2h equal to or greater than a diameter WC-1d of the first working coil WC-1 may be formed in the working coil WC-2.

Accordingly, the first working coil WC-1 may be disposed inside the second working coil WC-2.

As illustrated in FIG. 11, in the cooktop 1 according to an embodiment of the present disclosure, the center TL-C of the opening TL-I of the thin film TL may overlap the center WC-C of the working coil portion in the vertical direction.

At least a portion of the opening TL-I and the first working coil WC-1 may overlap in the vertical direction. In addition, at least a portion of the second working coil WC-2 and the thin film TL may overlap in the vertical direction.

When disposed as illustrated in FIG. 11, when only the first working coil WC-1 operates and when both the first working coil WC-1 and the second working coil WC-2 operate, decrease in heating efficiency with respect to each of a magnetic material and a nonmagnetic material can be minimized.

For example, when the object to be heated HO is a magnetic material and only the first working coil WC-1 operates, a magnetic field induced in the first working coil WC-1 is transferred to the object to be heated HO through the opening TL-I of the thin film and thus heating efficiency can greatly increase.

In addition, when the object to be heated HO is a nonmagnetic material, the magnetic field induced in the first working coil WC-1 and the second working coil WC2 is first combined with the thin film TL, so even when the object to be heated HO is a nonmagnetic material, the heating efficiency may not decrease.

Accordingly, when being disposed as illustrated in FIG. 11, there is an advantage that decrease in heating efficiency can be minimized in a case where the object to be heated HO is both the magnetic material and the nonmagnetic material.

Next, a method for controlling an induction heating type cooktop according to an embodiment of the present disclosure will be described with reference to FIGS. 12 to 13.

FIG. 12 is a control block diagram illustrating the configuration of an induction heating type cooktop according to an embodiment of the present disclosure.

Referring to FIG. 12, the induction heating type cooktop 1 may include an inverter 60, a controller 70, a control module 40 for an input interface, and a switch portion SW.

The control module 40 for the input interface may receive input information such as heating intensity or driving time received from the interface portion (not illustrated) and transmit the input information to the controller 70. The input information that the controller 70 receives through the control module 40 for the input interface may include information on the target power.

The inverter 60 may provide a resonance current to the working coil portion WC through a switching operation. The switching operation of the inverter 60 may be performed by a switching operation control signal of the controller 70.

The inverter 60 may drive only the first working coil WC-1 or may drive the first working coil WC-1 and the second working coil WC-2 together, according to the embodiment.

The switch SW may include the first switch SW1 connected between the first working coil WC-1 and the second working coil WC-2, and a second switch SW2 connected between the first working coil WC-1 and the resonance capacitor C2- 1 and C2-2. The switch SW may be driven to control whether the first working coil WC-1 and the second working coil WC-2 are connected in series.

The controller 70 can turn on or off the first switch SW1 to control whether the first working coil WC-1 and the second working coil WC-2 are connected in series or can control to turn off or on the switch SW.

The controller 70 may control to turn on or off the first switch SW1 and the second switch SW2 according to whether the target power and the output power match.

In addition, the controller 70 may control the overall operation of the induction heating type cooktop 1.

Meanwhile, since the induction heating type cooktop 1 illustrated in FIG. 12 is only one embodiment of the present disclosure, some of the illustrated components may be integrated, added, or omitted according to the specifications of the induction heating type cooktop 1 that is actually implemented.

The induction heating type cooktop 1 according to an embodiment of the present disclosure may increase the heating efficiency by selectively driving the working coil portion WC according to whether the target power and the output power match even if the induction heating type cooktop 1 is not provided with a vessel discrimination sensor for discriminating whether the object to be heated HO is a magnetic material or a nonmagnetic material.

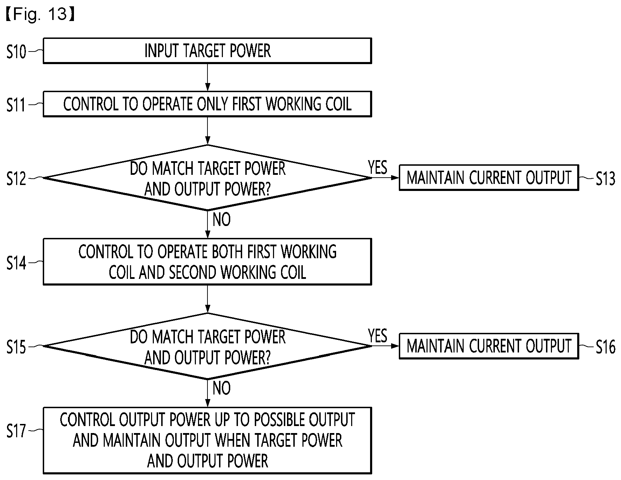

Referring to FIG. 13, a method for selectively controlling the working coil portion WC according to whether the target power and the output power match, by the controller 70 of the induction heating type cooktop 1 according to an embodiment of the present disclosure, is described.

FIG. 13 is a flowchart illustrating a method for operating an induction heating type cooktop according to an embodiment of the present disclosure.

The controller 70 may receive the target power through the control module 40 for the input interface (S10). The target power may be a power required to be output from the power supply V driving the working coil portion WC. The target power may vary according to a user's desired heating intensity.

The controller 70 may control only the first working coil WC-1 to operate (S12). The controller 70 may turn off the first switch SW1 to control only the first working coil WC-1 to operate. When the first switch SW1 is turned off, an electric current is applied only to the first working coil WC-1 by the inverter 60 so that only the first working coil WC-1 may operate.

The controller 70 may control only the first working coil WC-1 to operate and determine whether the target power and the output power match (S12). The output power is a value obtained by multiplying the voltage and an electric current in the power supply V for driving the working coil portion WC, and the controller 70 senses the output power of the power supply V to determine whether the output power matches the target power.

When only the first working coil WC-1 operates, the magnetic field passing through the opening TL-I of the thin film TL may combine with the object to be heated HO to heat the object to be heated HO. At this time, since the strength of the magnetic field coupled to the thin film TL is weak compared to the strength of the magnetic field coupled to the object to be heated HO, a case where only the first working coil WC-1 operates may be a suitable mode when the object to be heated HO is a magnetic material.

The controller 70 may maintain the current output when the target power and the output power match (S13).

When only the first working coil WC-1 operates, the matching of the target power and the output power may mean that the object to be heated HO is being properly heated to the target output.

Accordingly, when the target power and the output power match, the controller 70 may maintain the current output (S13).

Conversely, when the target power and the output power do not match, the controller 70 may control both the first working coil WC-1 and the second working coil WC-2 to operate (S14).

The controller 70 may turn on the first switch SW1 to control both the first working coil WC-1 and the second working coil WC-2 to operate. When the first switch SW1 is turned on, the second switch SW2 is turned off so that electric current may be applied to both the first working coil WC-1 and the second working coil WC-2 by the inverter 60. In this case, both the first working coil WC-1 and the second working coil WC-2 may operate.

The fact that the target power and the output power do not match when only the first working coil WC-1 operates may mean, when the object to be heated HO is a magnetic material, a case where the target power is high and thus it is difficult to satisfy the output power by only the operation of the first working coil WC-1.

Alternatively, even when the object to be heated HO is a nonmagnetic material, the target power and the output power may not match when only the first working coil WC-1 operates. This is because the strength of the magnetic field coupled to the thin film TL is weak, so that the object to be heated HO, which is a nonmagnetic material, may not heat suitably.

After controlling both the first working coil WC-1 and the second working coil WC-2 to operate, the controller 70 determines whether the target power matches the output power (S15).

When the target power and the output power match, the controller 70 may maintain the current output (S16). In other words, the controller 70 may control both the first working coil WC-1 and the second working coil WC-2 to operate, so that when the target power and the output power match, the controller may maintain the current output.

On the other hand, if the target power and the output power do not match, the controller 70 may control the output power up to a possible output, and if the target power and the output power match, the controller 70 may maintain the output (S17).

A case where the target power and the output power do not match after controlling both first working coil WC-1 and second working coil WC-2 to operate may mean that the object to be heated HO is not being heated with the target output.

Accordingly, the controller 70 can control until reaching target power by increasing or decreasing the applied voltage if the target power and the output power do not match in a state where the controller controls so that both the first working coil WC-1 and the second working coil WC-2 operate, and when the target power and the output power match, the a possible output by the operation of the first working coil WC-1 and the second working coil WC-2 can be maintained.

In the case of controlling the cooktop 1 according to this flowchart, the induction heating type cooktop 1 according to an embodiment of the present disclosure has an advantage in that the object to be heated HO can be efficiently heat without separately providing a sensor detecting whether the object to be heated HO is a magnetic material or a nonmagnetic material.

In a case of the object to be heated HO, which is a magnetic material, if the target power is not high, the object to be heated HO can be heated only by the operation of the first working coil WC-1, and this is because only a case where the object to be heated HO is a nonmagnetic material or a magnetic material to which a high target power is input, the object HO to be heated can be efficiently heated by deriving the first working coil WC-1 and the second working coil WC-2.

In other words, when the magnetic object to be heated HO is disposed on the upper surface of the upper plate portion 15, the magnetic object to be heated HO may be directly heated by the first working coil WC-1 according to the target power or may be heated by the first working coil WC-1 and the second working coil WC-2.

For example, the magnetic object to be heated HO is directly heated by the first working coil WC-1 when the target power and the output power match in a state where the first switch SW1 is turned off, and when the target power and the output power do not match in a state where the first switch SW1 is turned off, the first switch SW1 is changed to a state of being turned on and thus the magnetic object to be heated HO can be heated by the first working coil WC-1 and the second working coil WC- 2.

On the other hand, when the nonmagnetic object to be heated HO is disposed on the upper surface of the upper plate portion 15, the nonmagnetic object to be heated HO can be heated by the thin film TL heated by the first working coil WC-1 and the second working coil WC-2.

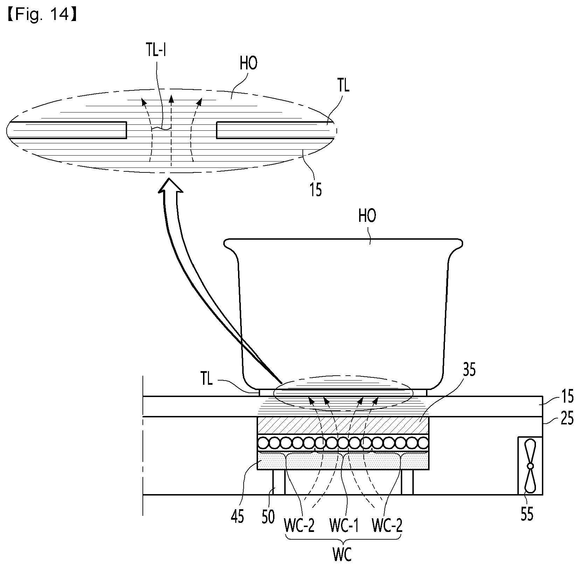

Next, with reference to FIGS. 14 to 15, a method for heating the object to be heated HO using only the first working coil WC-1, or heating using both first working coil WC-1 and the second working coil WC-2 by the induction heating type cooktop 1 will be described.

FIG. 14 is an exemplary view illustrating a coupling state of a magnetic field when only the first working coil operates according to an embodiment of the present disclosure.

When the induction heating type cooktop 1 according to the embodiment of the present disclosure is viewed from the side, the first working coil WC-1 may be located inside the working coil portion WC, and the second working coil WC-2 may be located outside the working coil portion WC.

As described above, according to the embodiment, the induction heating type cooktop 1 may operate only the first working coil WC-1.

An arrow illustrated in FIG. 14 may mean a magnetic field generated in the first working coil WC-1.

In other words, when the magnetic field is generated only in the first working coil WC-1, it can be confirmed that the magnetic field is concentrated inside the working coil portion WC.

The magnetic field induced in the first working coil WC-1 passes through the opening TL-I of the thin film that is vertically overlapped with the first working coil WC-1 to generate an eddy current in the object to be heated HO and then may heat the object to be heated HO.

As described above, since the magnetic field concentrated on the first working coil WC-1 passes through the opening TL-I of the thin film and is highly likely to be coupled to the object to be heated HO, the eddy current flowing in the thin film TL can be minimized.

This embodiment may be a suitable embodiment when the output power matches the target power only by driving the first working coil WC-1.

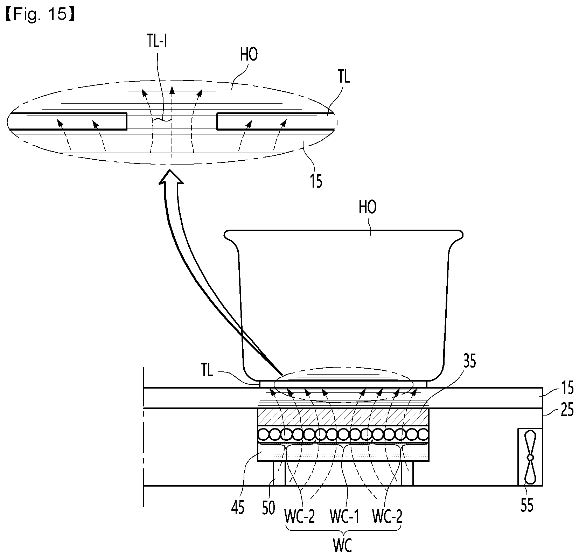

FIG. 15 is an exemplary diagram illustrating a state where a magnetic field is coupled when both a first working coil and a second working coil operate according to an embodiment of the present disclosure.

As described above, when the output power does not reach the target power only by driving the first working coil WC-1, both the first working coil WC-1 and the second working coil WC-2 may operate.

The arrows illustrated in FIG. 15 may mean magnetic fields generated in the first working coil WC-1 and the second working coil WC-2.

The eddy current applied to the object to be heated HO or the thin film TL by the magnetic field induced in the first working coil WC-1 and the second working coil WC-2 may vary according to the impedance between the object to be heated HO and the thin film TL as described above. Since this has been described in detail with reference to FIGS. 5 to 7, a redundant description thereof will be omitted.

As illustrated in FIG. 15, a case where both the first working coil WC-1 and the second working coil WC-2 operate may be an embodiment suitable for a case where the output power does not match the target power only by driving the first working coil WC-1.

The above description is merely illustrative, and various modifications and variations will be possible without departing from the essential characteristics of the present disclosure by those of ordinary skill in the art to which the present disclosure pertains.

The protection scope of the present disclosure should be interpreted by the following claims, and all technical ideas within the scope equivalent thereto should be construed as being included in the scope of the present disclosure.

## Claims

1. An induction heating type cooktop (1) comprising:
a case (25);
a cover plate (20) coupled to the upper end of the case and provided with an upper plate portion (15) on which an object to be heated is placeable;
a thin film (TF) coated on the upper plate portion;
a first working coil (WC-1) and a second working coil (WC-2) provided inside the case;
an inverter (60) connected to the first working coil; and **characterised by**
a first switch (SW1) connected between the first working coil and the second working coil; and by
a controller (70) configured to control only the first working coil (WC-1) to operate or control both the first working coil (WC-1) and the second working coil (WC-2) to operate according to whether a target power and an output power match.

2. The induction heating type cooktop (1) of claim 1,
wherein the first switch (SW1) determines whether the first working coil (WC-1) and the second working coil (WC-2) are connected in series.

3. The induction heating type cooktop (1) of claim 1 or 2, further comprising:
a second switch (SW2) connected between the first working coil (WC-1) and a resonance capacitor (C2).

4. The induction heating type cooktop (1) of claim 3,
wherein, when the first switch (SW1) is turned on, the second switch (SW2) is turned off, and
wherein, when the first switch is turned off, the second switch is turned on.

5. The induction heating type cooktop (1) of any one of claims 1 to 4,
wherein an opening (TL-I) is formed in the center of the thin film (TF), and
wherein the center of the opening overlaps the center of the first working coil (WC-1) in a vertical direction.

6. The induction heating type cooktop (1) of claim 5,
wherein the diameter of the opening (TL-I) is the same as the diameter of the first working coil (WC-1) or smaller than the diameter of the first working coil.

7. The induction heating type cooktop (1) of claim 6,
wherein the diameter of the second working coil (WC-2) is greater than the diameter of the first working coil (WC-1), and
wherein a hole (WC-2h) equal to or larger than the diameter of the first working coil is formed inside the second working coil.

8. The induction heating type cooktop (1) of any one of claims 1 to 7,
wherein the first working coil (WC-1) is disposed inside the second working coil (WC-2).

9. The induction heating type cooktop (1) of any one of claims 1 to 8,
wherein, when the first switch (SW1) is turned on, electric current is applied to the first working coil (WC-1) and the second working coil (WC-2) by the inverter (60), and
wherein, when the first switch is turned off, electric current is applied to the first working coil by the inverter.

10. The induction heating type cooktop (1) of any one of claims 1 to 9, and wherein the controller (70) is configured to turn on or off the first switch (SW1).

11. The induction heating type cooktop (1) of claim 10,
wherein the controller (70) is configured to turn on or off the first switch (SW1) according to whether the target power and the output power match.

12. The induction heating type cooktop (1) of claim 11,
wherein the controller (70) is configured to determine, after turning off the first switch (SW1), whether the target power and the output power match, and turn on the first switch when the target power and the output power do not match.

13. The induction heating type cooktop (1) of any one of claims 1 to 12,
wherein, when a magnetic object to be heated is disposed on the upper surface of the upper plate portion (15), the magnetic object to be heated is directly heated by the first working coil (WC-1) or is heated by the first working coil and the second working coil (WC-2) according to the target power, and
wherein, when a non-magnetic object to be heated is disposed on the upper surface of the upper plate portion, the non-magnetic object to be heated is heated by the thin film (TF) heated by the first working coil and the second working coil.

14. The induction heating type cooktop (1) of claim 13,
wherein, when the target power and the output power match in a state where the first switch (SW1) is turned off, the magnetic object to be heated is directly heated by the first working coil (WC-1), and
wherein, when the target power and the output power do not match in a state where the first switch is turned off, the first switch is changed to an on-state and heated by the first working coil and the second working coil (WC-2).

## Patentansprüche

1. Induktionskochfeld (1), umfassend:
ein Gehäuse (25);
eine Abdeckplatte (20), die mit dem oberen Ende des Gehäuses verbunden ist und mit einem oberen Plattenabschnitt (15) versehen ist, auf dem ein zu beheizender Gegenstand platziert werden kann;
einen dünnen Film (TF), der auf den oberen Plattenabschnitt aufgetragen ist;
eine erste Arbeitsspule (WC-1) und eine zweite Arbeitsspule (WC-2), die im Inneren des Gehäuses vorgesehen sind;
einen Wechselrichter (60), der mit der ersten Arbeitsspule verbunden ist; und **gekennzeichnet durch**
einen ersten Schalter (SW1), der zwischen der ersten Arbeitsspule und der zweiten Arbeitsspule angeschlossen ist; und durch
eine Steuerung (70), die dazu eingerichtet ist, nur den Betrieb der ersten Arbeitsspule (WC-1) zu steuern oder den Betrieb sowohl der ersten Arbeitsspule (WC-1) als auch der zweiten Arbeitsspule (WC-2) zu steuern, je nachdem, ob eine Zielleistung und eine Ausgangsleistung übereinstimmen.

2. Induktionskochfeld (1) nach Anspruch 1,
wobei der erste Schalter (SW1) bestimmt, ob die erste Arbeitsspule (WC-1) und die zweite Arbeitsspule (WC-2) in Reihe geschaltet sind.

3. Induktionskochfeld (1) nach Anspruch 1 oder 2, das ferner umfasst:
einen zweiten Schalter (SW2), der zwischen der ersten Arbeitsspule (WC-1) und einem Resonanzkondensator (C2) angeschlossen ist.

4. Induktionskochfeld (1) nach Anspruch 3,
wobei, wenn der erste Schalter (SW1) eingeschaltet ist, der zweite Schalter (SW2) ausgeschaltet ist, und
wobei, wenn der erste Schalter ausgeschaltet ist, der zweite Schalter eingeschaltet ist.

5. Induktionskochfeld (1) nach einem der Ansprüche 1 bis 4,
wobei eine Öffnung (TL-I) in der Mitte des dünnen Films (TF) gebildet ist, und
wobei die Mitte der Öffnung die Mitte der ersten Arbeitsspule (WC-1) in vertikaler Richtung überlappt.

6. Induktionskochfeld (1) nach Anspruch 5,
wobei der Durchmesser der Öffnung (TL-I) gleich dem Durchmesser der ersten Arbeitsspule (WC-1) oder kleiner als der Durchmesser der ersten Arbeitsspule ist.

7. Induktionskochfeld (1) nach Anspruch 6,
wobei der Durchmesser der zweiten Arbeitsspule (WC-2) größer ist als der Durchmesser der ersten Arbeitsspule (WC-1), und
wobei ein Loch (WC-2h), das gleich oder größer als der Durchmesser der ersten Arbeitsspule ist, im Inneren der zweiten Arbeitsspule ausgebildet ist.

8. Induktionskochfeld (1) nach einem der Ansprüche 1 bis 7,
wobei die erste Arbeitsspule (WC-1) innerhalb der zweiten Arbeitsspule (WC-2) angeordnet ist.

9. Induktionskochfeld (1) nach einem der Ansprüche 1 bis 8,
wobei, wenn der erste Schalter (SW1) eingeschaltet ist, elektrischer Strom an die erste Arbeitsspule (WC-1) und die zweite Arbeitsspule (WC-2) durch den Wechselrichter (60) angelegt wird, und
wobei, wenn der erste Schalter ausgeschaltet ist, elektrischer Strom durch den Wechselrichter an die erste Arbeitsspule angelegt wird.

10. Induktionskochfeld (1) nach einem der Ansprüche 1 bis 9, wobei die Steuerung (70) dazu eingerichtet ist, den ersten Schalter (SW1) ein- oder auszuschalten.

11. Induktionskochfeld (1) nach Anspruch 10,
wobei die Steuerung (70) dazu eingerichtet ist, den ersten Schalter (SW1) ein- oder auszuschalten, je nachdem, ob die Zielleistung und die Ausgangsleistung übereinstimmen.

12. Induktionskochfeld (1) nach Anspruch 11,
wobei die Steuerung (70) dazu eingerichtet ist, nach dem Ausschalten des ersten Schalters (SW1) festzustellen, ob die Zielleistung und die Ausgangsleistung übereinstimmen, und den ersten Schalter einzuschalten, wenn die Zielleistung und die Ausgangsleistung nicht übereinstimmen.

13. Induktionskochfeld (1) nach einem der Ansprüche 1 bis 12,
wobei, wenn ein zu erwärmendes magnetisches Objekt auf der oberen Fläche des oberen Plattenabschnitts (15) angeordnet ist, das zu erwärmende magnetische Objekt direkt durch die erste Arbeitsspule (WC-1) erwärmt wird oder durch die erste Arbeitsspule und die zweite Arbeitsspule (WC-2) entsprechend der Zielleistung erwärmt wird, und
wobei, wenn ein zu erwärmendes nichtmagnetisches Objekt auf der oberen Oberfläche des oberen Plattenabschnitts angeordnet ist, das zu erwärmende nichtmagnetische Objekt durch den Dünnfilm (TF) erwärmt wird, der durch die erste Arbeitsspule und die zweite Arbeitsspule erwärmt wird.

14. Induktionskochfeld (1) nach Anspruch 13,
wobei, wenn die Zielleistung und die Ausgangsleistung in einem Zustand, in dem der erste Schalter (SW1) ausgeschaltet ist, übereinstimmen, das zu erwärmende magnetische Objekt direkt durch die erste Arbeitsspule (WC-1) erwärmt wird, und
wobei, wenn die Zielleistung und die Ausgangsleistung in einem Zustand, in dem der erste Schalter ausgeschaltet ist, nicht übereinstimmen, der erste Schalter in einen Ein-Zustand geändert wird und durch die erste Arbeitsspule und die zweite Arbeitsspule (WC-2) beheizt wird.

## Revendications

1. Table de cuisson de type à chauffage par induction (1) comprenant:
un boîtier (25);
une plaque de recouvrement (20) couplée à l'extrémité supérieure du boîtier et pourvue d'une partie supérieure de plaque (15) sur laquelle peut être placé un objet à chauffer;
un film mince (TF) revêtu sur la partie supérieure de plaque;
une première bobine de travail (WC-1) et une deuxième bobine de travail (WC-2) placées à l'intérieur du boîtier;
un onduleur (60) connecté à la première bobine de travail; et **caractérisée par**
un premier commutateur (SW1) connecté entre la première bobine de travail et la deuxième bobine de travail; et par
un organe de commande (70) conçu amener uniquement la première bobine de travail (WC-1) à fonctionner ou pour amener la première bobine de travail (WC-1) et la deuxième bobine de travail (WC-2) à fonctionner dès lors qu'une puissance cible est adaptée à une puissance de sortie.

2. Table de cuisson de type à chauffage par induction (1) selon la revendication 1,
dans lequel le premier commutateur (SW1) détermine si la première bobine de travail (WC-1) et la deuxième bobine de travail (WC-2) sont connectées en série.

3. Table de cuisson de type à chauffage par induction (1) selon la revendication 1 ou 2, comprenant en outre:
un deuxième un deuxième commutateur (SW2) connecté entre la première bobine de travail (WC-1) et un condensateur de résonance (C2).

4. Table de cuisson de type à chauffage par induction (1) selon la revendication 3,
dans lequel, lorsque le premier commutateur (SW1) est allumé, le second commutateur (SW2) est éteint, et
dans lequel, lorsque le premier commutateur éteint, le second commutateur est allumé.

5. Table de cuisson de type à chauffage par induction (1) selon l'une quelconque des revendications 1 à 4,
dans lequel une ouverture (TL-I) est ménagée au centre du film mince (TF), et
dans lequel le centre de l'ouverture chevauche le centre de la première bobine de travail (WC-1) dans une direction verticale.

6. Table de cuisson de type à chauffage par induction (1) selon la revendication 5,
dans lequel le diamètre de l'ouverture (TL-I) est identique au diamètre de la première bobine de travail (WC-1) ou inférieur au diamètre de la première bobine de travail.

7. Table de cuisson de type à chauffage par induction (1) selon la revendication 6,
dans lequel le diamètre de la deuxième bobine de travail (WC-2) est supérieur au diamètre de la première bobine de travail (WC-1), et
dans lequel un trou (WC-2h) égal ou supérieur au diamètre de la première bobine de travail est ménagé à l'intérieur de la deuxième bobine de travail.

8. Table de cuisson de type à chauffage par induction (1) selon l'une quelconque des revendications 1 à 7,
la première bobine de travail (WC-1) est disposée à l'intérieur de la deuxième bobine de travail (WC-2).

9. Table de cuisson de type à chauffage par induction (1) selon l'une quelconque des revendications 1 à 8,
dans lequel, lorsque le premier commutateur (SW1) est allumé, le courant électrique est appliqué à la première bobine de travail (WC-1) et à la deuxième bobine de travail (WC-2) par l'onduleur (60), et
dans lequel, lorsque le premier interrupteur est éteint, le courant électrique est appliqué à la première bobine de travail par l'onduleur.

10. Table de cuisson de type à chauffage par induction (1) selon l'une quelconque des revendications 1 à 9, et dans laquelle l'organe de commande (70) est conçu pour allumer ou éteindre le premier commutateur (SW1).

11. Table de cuisson de type à chauffage par induction (1) selon la revendication 10,
dans lequel l'organe de commande (70) est conçu pour allumer ou éteindre le premier commutateur (SW1) dès lors que la puissance cible est adaptée à la puissance de sortie.

12. Table de cuisson de type à chauffage par induction (1) selon la revendication 11,
dans lequel l'organe de commande (70) est conçu pour déterminer, après avoir éteint le premier commutateur (SW1), si la puissance cible et la puissance de sortie coïncident, et pour allumer le premier commutateur lorsque la puissance cible et la puissance de sortie ne coïncident pas.

13. Table de cuisson de type à chauffage par induction (1) selon l'une quelconque des revendications 1 à 12,
dans lequel, lorsqu'un objet magnétique à chauffer est disposé sur la surface supérieure de la partie supérieure de la plaque (15), l'objet magnétique à chauffer est directement chauffé par la première bobine de travail (WC-1) ou est chauffé par la première bobine de travail et la deuxième bobine de travail (WC-2) en fonction de la puissance cible, et
dans lequel, lorsqu'un objet non magnétique à chauffer est disposé sur la surface supérieure de la partie supérieure de la plaque (15), l'objet non magnétique à chauffer est directement chauffé par le premier film mince (TF) chauffé par la première bobine de travail et la deuxième bobine de travail.

14. Table de cuisson de type à chauffage par induction (1) selon la revendication 13,
dans lequel, lorsque la puissance cible et la puissance de sortie correspondent au moment où le premier commutateur (SW1) est éteint, l'objet magnétique à chauffer est directement chauffé par la première bobine de travail (WC-1), et
dans lequel, lorsque la puissance cible et la puissance de sortie ne coïncident pas au moment où le premier commutateur est éteint, le premier commutateur passe dans un état allumé et est chauffé par la première bobine de travail et la deuxième bobine de travail(WC-2).
